# EUROPEAN PATENT SPECIFICATION

(11) **EP 2 193 722 B1**
(45) Date of publication and mention of the grant of the patent: **20.04.2016**
(21) Application number: 08761608.2
(22) Date of filing: 19.05.2008
(51) Int. Cl.: A23K 10/14, A23K 20/00, A23K 20/189, A23K 50/90

(54) **METHOD FOR OBTAINING PLANT-BASED BEE FEED AND RESULTING PRODUCT**
VERFAHREN ZUR GEWINNUNG VON BIENENFUTTER AUF PFLANZENBASIS UND ERHALTENES PRODUKT
PROCÉDÉ D'OBTENTION D'UN ALIMENT DE TYPE VÉGÉTAL POUR ABEILLES ET PRODUIT AINSI OBTENU

(30) Priority: 26.07.2007 ES 200702085
(43) Date of publication of application: 09.06.2010
(73) Proprietor: Mieles Llovell, S.L., 46294 Carcer - Valencia (ES)
(72) Inventor: LLOVELL GARCIA, Alfonso, E-46294 Carcer - Valencia (ES)
(74) Representative: Ungria López, Javier
(86) International application number: PCT/ES2008/070096
(87) International publication number: WO 2009/013381

(56) References cited:
- WO-A1-2005/025306
- FR-A- 2 051 298
- FR-A5- 2 051 298
- JP-A- H1 198 962
- JP-A- 11 098 962
- SE-A- 8 005 665
- SU-A- 1 528 407
- SU-A- 1 787 419
- SU-A1- 1 674 760
- US-A- 4 386 107
- KÄHKONEN M P, HOPIA A I ET AL.: "Antioxidant activity of plant extracts containing phenolic compounds", J. AGRIC. FOOD CHEM., vol. 47, 1999, pages 3954-3962,
- RICE-EVANS C, MILLER N ET AL.: "Antioxidant properties of phenolic compounds", TRENDS IN PLANT SCIENCE, [Online] vol. 2, no. 4, 1997, pages 152-159, DOI: 10.1016/S1360-1385(97)01018-2
- IGNAT I, VOLF I ET AL.: "A critical review of methods for characterisation of polyphenolic compounds in fruits and vegetables", FOOD CHEMISTRY, vol. 126, no. 4, June 2011 (2011-06), pages 1821-1835,

## Description

### OBJECT OF THE INVENTION

The object of the present invention patent is to present a new method for obtaining plant-based bee feed and the resulting product.

By means of this new method it is obtained a bee feed providing all the necessary vitamins so that the bees do not require any additional feed source, being able to solve by a single product all the nutritional needs of the same.

This new invention has special application in the apiculture field, where there is the need for making use of said product.

### BACKGROUND OF THE INVENTION

In view of the current high mortality that is taking place in most of the beehives, we have found that the lack of natural food made by the bees induces strong metabolic alterations and an extreme sanitary weakness in them.

Thus, it is vital for the future of apiculture and the development of the honey productive industry to make a substitute feed for honey.

For instance, FR 2051298 A5 teaches the addition of fructose instead of natural honey to a dry bee feed, the fructose being extracted by acid hydrolysis of saccharose thanks to the presence of saccharose-hydrolising enzyme; preferably, antibiotics may be comprised therein. US 4,386,107 proposes a pollen substitute for apiculture similar to that of natural pollen, based on lactic yeasts, vegetable proteins and whole-egg powder, and that preferably may contain different types of acids or Chine anise powder. Another pollen-substituting feed for bees resistant to rotting and fungous generation is disclosed in JP H11 98962 A, including glutinous rice, saccharides, a pollen component or a substitute thereof, such as soybean powder or beer yeast. In turn, international patent application WO 2005/025306 A1 discloses honey-based compositions for feeding bees, with acaricide effect thanks to the presence of one type of benzoic and cinnamic acid mixture and/or esters thereof that act as repellent for Varroa destructor. The use of thymol as a constituent of bee feed for combating Varroa infection is disclosed in SU 1674760 A1, a patent application that describes how to obtain a sugar syrup solution with said properties by dissolving the thymol during the preparation process.

Honey production and other apiculture derivatives have as main adverse effect the deprivation of the bee feed made by bees for themselves with the purpose of fulfilling their nutritional needs during the winter, or during adverse climatic factors.

Currently there are sugar-based bee feeds obtained by different means, which have not proved being able to be honey substitutes, nor the drug complementation has proved having high efficiency due to treating very specific problems, and existing even metabolic problems for removing the excess drug.

Pathogens virulently attacking the *Apis mellifera* already exist, and there are clear symptoms of high mortality among bees, commonly named "honey bee depopulation syndrome". We have found that this symptomatology involves the nutritional lack of certain plant principles which are responsible for the *Apis mellifera* defense metabolism.

The present invention patent is directed to create a method for obtaining plant-based bee feed, as well as to the product itself, not presenting the mentioned drawbacks and allowing attaining a final product with better nutritional properties regarding the existing compositions utilizing sugar as base, and plant extracts which normally honey and other products made by the bee contain.

### DESCRIPTION OF THE INVENTION

This new method for obtaining plant-based bee feed and resulting product, object of the present invention patent, is presented in order to alleviate or, in its case, remove all the aforementioned problems.

This new method for making bee feed originates from a thorough honey making study from flower nectars, and the search for alternative sources in composition which makes it viable not to have a feed production ceiling, which can be used to feed bees, providing all the necessary nutrition contained in a honey and other nutrients naturally collected by the bee.

For that purpose, studies on many plant species have been conducted until finding those that have allowed obtaining the necessary extracts typical of the food base of the *Apis mellifera* and other *Apis* species.

The common carrier utilized for obtaining and preserving the necessary plant principles is sugar extracts, irrespective of the nature of the many sugars and polysaccharides existing in the plant world.

The plant varieties include the whole plant: leaves, stems, roots, flowers, fruits and seeds. So that when mentioning plant extract, it should be understood any part of the plant capable of being collected by man.

Plant extracts are obtained from plants subjected to milling, vaporization, and finally subjected to extraction processes in the specified conditions. In this way, a clean extract having the peculiarity of providing the bees (*Apis* sp) with the optimal nutritional conditions is attained, which in addition to providing kilocalories needed for their required daily exercise, provides the basic principles which activate their immune system

### DESCRIPTION OF THE DRAWINGS

In order to complement the description being carried out and with the object of helping to a better understanding of the characteristics of the invention, the present specification is accompanied by a figure, as an integral part thereof, wherein with illustrative but not limitative character, the following has been represented:

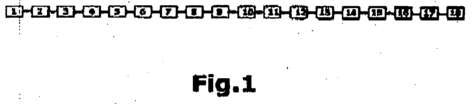

Figure 1: Flowchart of the method for obtaining plant-based bee feed and resulting product.

### PREFERRED EMBODIMENT OF THE INVENTION

Method for obtaining plant-based bee feed and resulting product, starting from a plant base (1) formed by any part of the vegetable or plant species (leaves, roots, or stems), as well as any type of fruits, flowers, seeds or derivatives thereof, that is rich in chemical constituent compounds of antioxidant nature derived from natural polyphenolic compounds, said plant base (1) will be used at a percentage between 0.01 and 60% of the total of the final product (18); subsequently said vegetable or plant species, as well as any type of fruits, flowers, seeds, or derivatives thereof, which are rich in chemical constituent compounds of antioxidant nature derived from natural polyphenolic compounds, forming the plant base (1) might be partially or completely dehydrated (2), according to the state wherein they are; then a milling (3) of said plant base (1) will be carried out, water (4) will be added to it in a range comprised between 5 and 50% thereof; subsequently it is mixed (5), for subsequently carrying out a vapor treatment (6) and removing undesirable volatile substances, according to the type of vegetable or plant species, as well as any type of fruit, seed, or derivatives thereof forming the plant base (1), limiting the maximum temperature of said vapor treatment (6) to 100 Celsius degrees; mono and/or polycarboxilic natural organic acids, as well as their salts (8) needed as to adopt a buffering effect of the pH between the value 2 and the value 9, are added to the resulting plant base (7). Enzymes of the type of amylases, glucoamylases, pectinases or pectinolytic enzymes, cellulases, and invertases (10) are added to the resulting mixture (9), in variable amount in the range from 1 mg/kg to 10000 mg/kg; the new obtained mixture (11) is homogenized and maintained at a temperature comprised between 25 and 55 Celsius degrees for a time not less than 30 minutes and not more than four hours; any type of sugar or polysaccharide (13) is added to this new mixture (12), in amounts oscillating between 5% and 900%; the new mixture (14) is homogenized and macerated by mixing (15) at a constant speed, obtaining a macerated mass (16), which is subjected to a solid/liquid separation (17), from which the final product (18) is obtained.

It should be highlighted that a plant base (1) formed by any part of the vegetable or plant species (leaves, roots, or stems), as well as any type of fruits, flowers, seeds or derivatives thereof, that is rich in chemical constituent compounds of antioxidant nature derived from natural polyphenolic compounds, said plant base (1) will be used at a percentage between 0.01 and 60% of the total of the final product (18).

It should also be highlighted that the plant base (1) may be formed by hydro-alcoholic plant extracts, with or without alcohol content, which when mixed with carbon hydrates, either sugars or polysaccharides, result in a product with characteristics similar to the final product (18).

Thus obtaining a final product (18) constituting a plant-based bee feed comprising:
- Carbon hydrates, between 40 and 90% of the total of the final product (18).
- Plant base content (1) formed by any part of the vegetable or plant species, as well as any type of fruit, flower, seed or derivative thereof, which is rich in chemical constituent compounds of antioxidant nature derived from natural polyphenolic compounds, at a percentage between 0.01 and 60% of the total of the final product (18).
- Mono and/or polycarboxilic natural organic acids amounts, as well as their salts (8), necessary for adopting a buffering effect of the pH between the value 2 and the value 9.

## Claims

1. Method for obtaining plant-based bee feed, **characterized in that** said method comprises the following steps:
- first, partially or totally dehydrating (2) a plant base (1) formed by any part of the vegetable or plant species selected from the group consisting of leaves, roots, stems, fruits, flowers, seeds or derivatives thereof, which is rich in antioxidant chemical constituent compounds derived from natural polyphenolic compounds, in a percentage between 0.01 and 60% of the total of the final product (18);
- then, milling (3) said dehydrated plant base (1), adding water (4) in a range comprised between 5 and 50% thereof, and subsequently mixing (5) thereof for
- subsequently carrying out a vapor treatment (6) and removing undesirable volatile substances, limiting the maximum temperature of said vapor treatment (6) to 100 Celsius degrees;
- adding mono and/or polycarboxilic natural organic acids, as well as the salts (8) thereof to the plant base (7) resulting from the previous step, in an amount needed for adopting a buffering effect of the pH between the value 2 and the value 9;
- adding enzymes of the type of amylases, glucoamylases, pectinases or pectinolytic enzymes, cellulases, and invertases (10) to the mixture (9) resulting from the previous step, in an amount in the range from 1 mg/kg to 10000 mg/kg;
- homogenizing and maintaining the new obtained mixture (11) at a temperature comprised between 25 and 55 Celsius degrees, during a time not less than 30 minutes and not more than four hours;
- adding any type of sugar or polysaccharide (13) to the new mixture (12), in amounts varying between 5% and 900%; the new mixture (14) being homogenized and macerated by mixing (15), which is carried out at a constant speed, obtaining a macerated mass (16); and
- subjecting the macerated mass (16) to a solid/liquid separation (17), for obtaining the final product (18).

2. Plant-based bee feed (18) obtainable by the method defined in claim 1, **characterized in that** it is a sugar plant-based bee feed comprising:
- carbon hydrates, between 40 and 90% of the total of the plant-based bee feed (18);
- a plant base (1) content, formed by any part of the vegetable or plant species selected from the group consisting of leaves, roots, stems, fruits, flowers, seeds or derivatives thereof, which is rich in antioxidant chemical constituent compounds derived from natural polyphenolic compounds, in a percentage between 0.01 and 60% of the total of plant-based bee feed (18);
- mono and/or polycarboxilic natural organic acids, as well as their salts (8), needed as to adopt a buffering effect of the pH between the value 2 and the value 9; and
- enzymes of the type of amylases, glucoamylases, pectinases or pectinolytic enzymes, cellulases, and invertases (10).

## Patentansprüche

1. Verfahren zum Erhalten von Bienenfutter auf Pflanzenbasis, **dadurch gekennzeichnet, dass** das genannte Verfahren die folgenden Schritte umfasst:
- zunächst partielle oder vollständige Dehydratisierung (2) einer Pflanzenbasis (1), gebildet durch einen Teil der Gemüse- oder Pflanzenart, ausgewählt aus der Gruppe bestehend aus Blättern, Wurzeln, Stengeln, Früchten, Blüten, Samen oder Derivaten davon, der reich an antioxidativen chemischen Bestandteilen abgeleitet von natürlichen polyphenolischen Verbindungen ist, in einem prozentualen Anteil zwischen 0,01 und 60% des gesamten Endprodukts (18);
- dann Mahlen (3) der genannten dehydratisierten Pflanzenbasis (1), Zugeben von Wasser (4) in einem Bereich, der zwischen 5 und 50% davon umfasst, und anschließendes Mischen (5) davon, zum
- anschließenden Durchführen einer Dampfbehandlung (6) und Entfernen der unerwünschten flüchtigen Substanzen, Beschränken der Maximaltemperatur der genannten Dampfbehandlung (6) auf 100 °C;
- Zugeben von natürlichen organischen Mono- und/oder Polycarbonsäuren sowie die Salze (8) davon zu der Pflanzenbasis (7), die aus dem vorherigen Schritt resultiert, in einer Menge, die benötigt wird, um einen Puffereffekt bei einem pH zwischen dem Wert 2 und dem Wert 9 zu erzielen;
- Zugeben von Enzymen vom Typ der Amylasen, Glucoamylasen, Pektinasen oder pektinolytischen Enzymen, Cellulasen und Invertasen (10) zu dem Gemisch (9), das aus dem vorherigen Schritt resultiert, in einer Menge im Bereich von 1 mg/kg bis 10.000 mg/kg;
- Homogenisieren und Halten des neu erhaltenen Gemischs (11) bei einer Temperatur zwischen 25 und 55 °C, während einer Zeit von nicht weniger als 30 Minuten und nicht mehr als 4 Stunden;
- Zugeben einer Art von Zucker oder Polysaccharid (13) zu dem neuen Gemisch (12) in Mengen, die zwischen 5% und 900% variierten; das neue Gemisch (14) homogenisiert und mazeriert wird durch Mischen (15), das bei einer konstanten Geschwindigkeit durchgeführt wird, um eine mazerierte Masse (16) zu erhalten; und
- Unterwerfen der mazerierten Masse (16) einer fest/flüssig Trennung (17), um das Endprodukt (18) zu erhalten.

2. Bienenfutter auf Pflanzenbasis (18), erhältlich durch das in Anspruch 1 beschriebene Verfahren, **dadurch gekennzeichnet, dass** es ein Zucker-Bienenfutter auf Pflanzenbasis ist, umfassend:
- Kohlenhydrate zwischen 40 und 90% des gesamten Bienenfutters auf Pflanzenbasis (18);
- einen Pflanzenbasis (1) Gehalt, gebildet durch einen Teil der Gemüse- oder Pflanzenart, ausgewählt aus der Gruppe bestehend aus Blättern, Wurzeln, Stengeln, Früchten, Blüten, Samen oder Derivaten davon, der reich an antioxidativen chemischen Bestandteilen abgeleitet von natürlichen polyphenolischen Verbindungen ist, in einem prozentualen Anteil zwischen 0,01 und 60% des gesamten Bienenfutters auf Pflanzenbasis (18);
- natürliche organische Mono- und/oder Polycarbonsäuren sowie deren Salze (8), die benötigt werden, um einen Puffereffekt bei einem pH zwischen dem Wert 2 und dem Wert 9 zu erzielen; und
- Enzyme vom Typ von Amylasen, Glucoamylasen, Pektinasen oder pektinolytischen Enzymen, Cellulasen und Invertasen (10).

## Revendications

1. Procédé d'obtention d'un aliment de type végétal pour abeilles, **caractérisé en ce que** ledit procédé comprend les étapes suivantes :
- tout d'abord, la déshydratation partielle ou totale (2) d'une base de plante (1) formée par une quelconque partie de l'espèce végétale ou de plante sélectionnée dans le groupe consistant en des feuilles, des racines, des tiges, des fruits, des fleurs, des graines ou des dérivés de ceux-ci, qui est riche en composés chimiques antioxydants constituants dérivés de composés polyphénoliques naturels, en un pourcentage compris entre 0,01 et 60 % du total du produit final (18) ;
- ensuite, le broyage (3) de ladite base de plante déshydratée (1), l'ajout d'eau (4) dans une plage comprise entre 5 et 50 % de celle-ci et, par la suite, le mélange de celle-ci pour
- la réalisation ultérieure d'un traitement à la vapeur (6) et l'élimination des substances volatiles indésirables, en limitant la température maximale dudit traitement à la vapeur (6) à 100 degrés Celsius ;
- l'ajout d'acides organiques naturels mono- et/ou polycarboxyliques, ainsi que les sels (8) de ceux-ci, à la base de plante (7) résultant de l'étape précédente, en une quantité nécessaire pour obtenir un effet tampon du pH entre la valeur 2 et la valeur 9 ;
- l'ajout d'enzymes du type des amylases, des glucoamylases, des pectinases ou des enzymes pectinolytiques, des cellulases, et des invertases (10) au mélange (9) résultant de l'étape précédente, en une quantité dans la plage de 1 mg/kg à 10 000 mg/kg ;
- l'homogénéisation et le maintien du nouveau mélange obtenu (11) à une température comprise entre 25 et 55 degrés Celsius, pendant une durée de 30 minutes au minimum et de quatre heures au maximum ;
- l'ajout d'un quelconque type de sucre ou de polysaccharide (13) au nouveau mélange (12), en des quantités variant entre 5 % et 900 % ; le nouveau mélange (14) étant homogénéisé et macéré par un mélange (15), qui est réalisé à une vitesse constante, en obtenant une masse macérée (16) ; et
- la soumission de la masse macérée (16) à une séparation solide/liquide (17), afin d'obtenir le produit final (18).

2. Aliment de type végétal pour abeilles (18) pouvant être obtenu par le procédé défini dans la revendication 1, **caractérisé en ce que** c'est un aliment de type végétal pour abeilles sucré comprenant :
- des glucides, entre 40 et 90 % du total de l'aliment de type végétal pour abeilles (18) ;
- une teneur en base de plante (1), formée par une quelconque partie de l'espèce végétale ou de plante sélectionnée dans le groupe consistant en des feuilles, des racines, des tiges, des fruits, des fleurs, des graines ou des dérivés de ceux-ci, qui est riche en composés chimiques antioxydants constituants dérivés de composés polyphénoliques naturels, en un pourcentage compris entre 0,01 et 60 % du total de l'aliment de type végétal pour abeilles (18) ;
- des acides organiques naturels mono- et/ou polycarboxyliques, ainsi que leurs sels (8), nécessaires pour obtenir un effet tampon du pH entre la valeur 2 et la valeur 9 ; et
- des enzymes du type des amylases, des glucoamylases, des pectinases ou des enzymes pectinolytiques, des cellulases, et des invertases (10).
